# EUROPÄISCHE PATENTANMELDUNG

(11) **EP 2 806 106 A1**
(43) Veröffentlichungstag der Anmeldung: **26.11.2014**
(21) Anmeldenummer: 13002704.8
(22) Anmeldetag: 23.05.2013
(51) Int. Cl.: F01D 5/16, F01D 5/26, F01D 25/06

(54) **Turbomaschinenschaufel mit einem Impulskörper**

(71) Anmelder: MTU Aero Engines AG, 80995 München (DE)
(72) Erfinder: Stiehler, Frank, 04924 Bad Liebenwerda (DE); Dr. Hartung, Andreas, 81829 München (DE)

(57) **Zusammenfassung**

Die vorliegende Erfindung betrifft eine Schaufel (1) für eine Turbomaschine, mit einem Schaufelblatt (1.1), das einen Kanal (1.5) aufweist, wobei in dem Kanal eine Stoßkammer (2) mit einem verengten Querschnitt zur Aufnahme eines einzigen Impulskörpers (3) angeordnet ist.

## Beschreibung

Die vorliegende Erfindung betrifft eine Schaufel für eine Turbomaschine, eine Turbomaschine, insbesondere eine Gasturbine, insbesondere eine Flugtriebwerk-Gasturbine, mit einer solchen Schaufel sowie ein Verfahren zum Herstellen einer solchen Schaufel.

Insbesondere Leit- und Laufschaufeln von Flugtriebwerk-Gasturbinen können aerofluiddynamisch, thermisch und/oder strukturmechanisch zu Schwingungen angeregt werden. Dabei kann es insbesondere zu selbsterregten Schwingungen kommen.

Aus der DE 10 2009 010 185 A1 ist es bekannt, in einem Hohlraum in einem Schaufelblatt mehrere Dämpfungskörper vorzusehen, die sich unabhängig voneinander relativ zu den Wänden des Hohlraums und relativ zueinander bewegen können, um durch elastische Stöße gegeneinander und gegen die Wände des Hohlraums Schwingungen zu dämpfen.

Ausgehend hiervon ist es eine Aufgabe der vorliegenden Erfindung, eine verbesserte Turbomaschine zur Verfügung zu stellen.

Diese Aufgabe wird durch eine Schaufel mit den Merkmalen des Anspruchs 1 gelöst. Anspruch 13 stellt eine Turbomaschine mit einer solchen Schaufel, Anspruch 14 ein Verfahren zum Herstellen einer solchen Schaufel unter Schutz. Vorteilhafte Weiterbildungen sind Gegenstand der Unteransprüche.

Eine Schaufel nach der vorliegenden Erfindung weist ein Schaufelblatt auf, das einen Kanal aufweist. Der Kanal kann insbesondere ein Durchgangskanal bzw. ein beidseitig offener Kanal und/oder ein Kanal sein, der sich über bzw. durch die gesamte Schaufelblatthöhe erstreckt. Der Kanal kann insbesondere ein Kühlkanal bzw. dazu vorgesehen sein, im Betrieb mit einem Kühlmedium, insbesondere Luft, durchströmt zu werden. Zusätzlich oder alternativ kann ein Kanal zur Gewichtsreduktion der Schaufel dienen.

In dem Kanal ist wenigstens eine, insbesondere eine einzige, Stoßkammer mit einem verengten Querschnitt zur Aufnahme eines einzigen Impulskörpers angeordnet.

Dadurch können nach einem Aspekt der vorliegenden Erfindung im Gegensatz zu dem großräumigen, mit mehreren Körpern gefüllten Hohlraum der DE 10 2009 010 185 A1 wohldefinierte Stoßbedingungen geschaffen und so die Wirksamkeit der stoßbasierten Schwingungsdämpfung verbessert werden. Durch die gegenüber dem übrigen Kanal verengte Stoßkammer können insbesondere eine oder mehrere Vorzugsbewegungs- und damit -stoßrichtungen des Impulskörpers vorgegeben werden.

In einer Ausführung kann die Stoßkammer in Kanallängs- bzw. Schaufelblatthöhenrichtung durch einen Absatz begrenzt sein, der in den Kanal vorsteht und so eine Bewegung des Impulskörpers in Kanallängsrichtung formschlüssig begrenzt. In einer Weiterbildung ist die Stoßkammer nur einseitig durch einen Absatz begrenzt, so dass der Impulskörper von der dem Absatz gegenüberliegenden Seite in die Stoßkammer ein- und aus dieser auch wieder austreten kann, vorzugsweise gravitations- und/oder fliehkraftbedingt. Gleichermaßen kann die Stoßkammer nach Aufnahme des Impulskörpers auch durch einen weiteren Absatz in Kanallängsrichtung beidseitig begrenzt werden.

Der Absatz zur Begrenzung der Stoßkammer in Kanallängsrichtung kann in einer Ausführung als Steg ausgebildet sein, der sich in den Kanal erstreckt. Auf der der Stoßkammer gegenüberliegenden Seite des Steges kann sich der Kanal vorteilhaft wieder erweitern. In einer Ausführung beträgt die Wandstärke des Steges maximal 50% eines maximalen Querschnitts des Impulskörpers, beispielsweise dessen Durchmesser. Durch einen Steg kann zum Einen der Kanal nach der Stoßkammer, vorteilhafterweise ungestört verlaufen, so dass beispielsweise eine Kühlfunktion nur möglichst wenig beeinflusst wird. Zusätzlich oder alternativ kann ein, insbesondere dünnerwandiger, Steg durch elastische Deformation die Stoßcharakteristik verbessern, insbesondere den Impulskörper optimal reflektieren.

In einer Ausführung ist die Stoßkammer in Profil- bzw. Profilsehnenrichtung einseitig durch einen Steg oder beidseitig durch zwei Stege begrenzt. In einer Ausführung kann das Schaufelblatt ein hohles Schaufelblatt mit, wenigstens im Wesentlichen, konstanter Wandstärke längs der Blattkontur sein, so dass der Kanalquerschnitt, wenigstens im Wesentlichen, kongruent zu einer Schaufelblatt-Außenkontur ist. Insbesondere in einem solchen Kanal mit einem strömungsprofilartigen Innenkanal kann durch einen oder zwei Stege, die sich quer zur Profilsehnenrichtung erstrecken, eine verengte Stoßkammer mit vorteilhaften Reflexionseigenschaften definiert werden. Unter einer Profilsehnenrichtung wird vorliegend insbesondere in fachüblicher Weise eine Richtung längs einer Skelett- oder Mittellinie des Schaufelblattquerschnitts verstanden.

Ein oder zwei Stege, die die Stoßkammer in Kanallängsrichtung begrenzen, und/oder ein oder zwei Stege, die die Stoßkammer in Profilsehnenrichtung begrenzen, können jeweils einen Durchbruch aufweisen. Auf diese Weise kann eine fluiddurchlässige Stoßkammer ausgebildet bzw. ein Fluidstrom, insbesondere ein Kühlmediumstrom, durch die Stoßkammer ermöglicht bzw. verbessert werden. Ein solcher Durchbruch kann an einer Kanalinnenwand ausgebildet sein, so dass sich der entsprechende Steg von einer Kanalinnenwand nicht über die komplette Kanalhöhe bis zu der gegenüberliegenden Kanalinnenwand erstreckt. Gleichermaßen können sich zwei Stegteile von einander gegenüberliegenden Kanalinnenwänden aufeinander zu erstrecken und durch den Durchbruch beabstandet sein, der dann im Kanalinneren bzw. nicht an einer Kanalinnenwand ausgebildet ist.

Zusätzlich oder alternativ zu einer Verengung bzw. Begrenzung in Profilsehnenrichtung kann die Stoßkammer auch, wenigstens im Wesentlichen, senkrecht hierzu bzw. in Blattdickenrichtung verengt bzw. die Kanalinnenwand an dieser Stelle lokal aufgedickt sein. Hierzu kann eine freie Kanalhöhe in Blattdickenrichtung und/oder senkrecht zur Profilsehnenrichtung innerhalb der Stoßkammer gegenüber einem in Kanallängsrichtung der Stoßkammer vor- und/oder nachgelagerten Kanalabschnitt reduziert sein.

Eine oder mehrere Seitenwände der Stoßkammer können sich in einer Ausführung, wenigstens im Wesentlichen, parallel zu einer Schaufelblattlängsachse bzw. -höhe erstrecken, so dass ein auftreffender Impulskörper, wenigstens im Wesentlichen, senkrecht zur Längsachse reflektiert wird. Gleichermaßen können eine oder mehrere Seitenwände der Stoßkammer auch gegen die Längsachse geneigt sein, insbesondere, um ein Einführen bzw. Aufnehmen des Impulskörpers zu verbessern.

Eine oder mehrere Seitenwände der Stoßkammer können sich in einer Ausführung, wenigstens im Wesentlichen, in oder senkrecht zu einer Schwingungseigenformrichtung der Schaufel erstrecken. Unter einer Schwingungseigenformrichtung der Schaufel wird vorliegend insbesondere in fachüblicher Weise eine Auslenkungsrichtung einer Schwingungseigenform der Schaufel, insbesondere einer Biege- oder Torsionseigenform, verstanden. Hierdurch kann die schwingungsdämpfende Wirkung der Stöße des refiektierten Impulskörpers verbessert werden.

In einer Ausführung ist die Stoßkammer in einem Bereich zwischen 10% und 90%, insbesondere zwischen 80% und 50%, der Schaufelhöhe, gemessen von einem Schaufelfuß aus, angeordnet. Durch diese Anordnung in einem mittleren Bereich, insbesondere einem zweitobersten Viertel der Schaufelhöhe, kann die schwingungsdämpfende Wirkung des Impulskörpers verbessert werden

In einer Ausführung wird die Stoßkammer zusammen mit dem Kanal urgeformt, insbesondere gegossen - hierdurch kann die Herstellung des Kanals und/oder das Einführen des Impulskörpers vereinfacht werden.

In einer Ausführung ist wenigstens ein, insbesondere genau ein bzw. ein einziger Impulskörper, in dem Kanal angeordnet und, wenigstens zeitweise, in der Stoßkammer aufgenommen.

Die Schaufel kann insbesondere eine Laufschaufel, insbesondere eine Verdichter-und/oder Turbinenstufe, sein. Vorteilhaft kann dabei der Impulskörper fliehkraftbedingt in die Stoßkammer getrieben werden. Gleichermaßen kann die Schaufel eine Leitschaufel, insbesondere eine Verdichter- und/oder Turbinenstufe, sein.

Eine erfindungsgemäße Schaufel kann insbesondere als Leit- oder Laufschaufel einer Gasturbine, insbesondere einer Flugtriebwerk-Gasturbine verwendet werden.

Nach einem Aspekt der vorliegenden Erfindung wird die Stoßkammer zusammen mit dem Durchgangskanal urgeformt, insbesondere gegossen, und anschließend der Impulskörper durch den Kanal eingeführt. Anschließend kann der Kanal, beispielsweise durch eine Rotor- oder Gehäusebefestigung, eine benachbarte Schaufel oder einen lösbaren oder dauerhaft, insbesondere stoffschlüssig, befestigten Verschluss eintrittsseitig verengt oder verschlossen werden.

Weitere Vorteile und Merkmale ergeben sich aus den Unteransprüchen und den Ausführungsbeispielen. Hierzu zeigt, teilweise schematisiert:
- Fig. 1:: einen Längsschnitt durch eine Schaufel nach einer Ausführung der vorliegenden Erfindung;
- Fig. 2:: einen vergrößerten Ausschnitt der Fig. 1 im Bereich A; und
- Fig. 3:: einen Querschnitt durch die Schaufel der Fig. 1 längs der Linie III-III in Fig. 2.

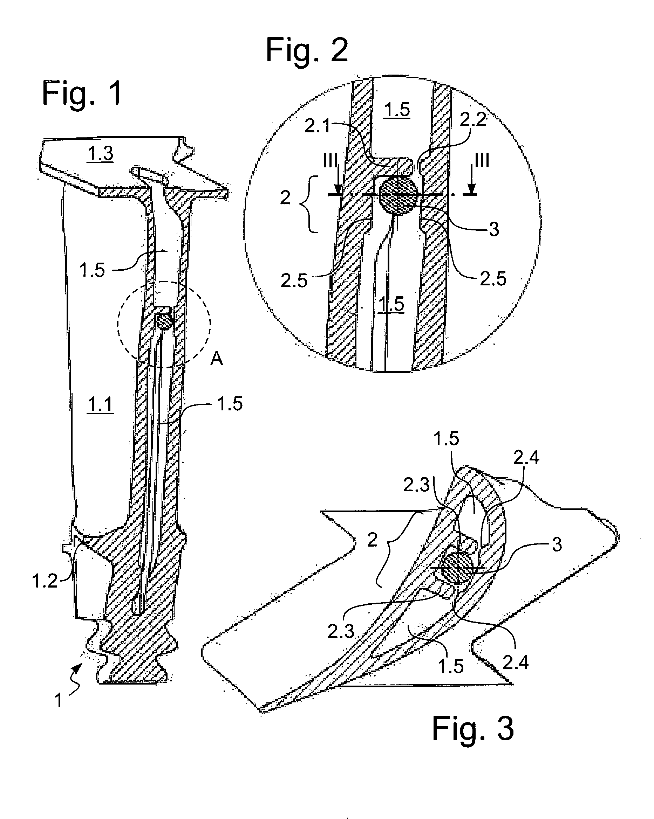

Fig. 1 zeigt eine Schaufel 1 nach einer Ausführung der vorliegenden Erfindung in einem Längsschnitt mit einem Schaufelblatt 1.1, das sich zwischen einem Schaufelfuß 1.2 und einem Deckband 1.3 erstreckt.

Das hohle Schaufelblatt 1.1 weist einen durchgehenden Kühlkanal 1.5 auf, in dem eine Stoßkammer 2 mit einem verengten Querschnitt angeordnet ist, in der ein einziger kugelförmiger Impulskörper 3 aufgenommen ist.

In Kanallängsrichtung (vertikal in Fig. 1) ist die Stoßkammer 2 durch einen Steg 2.1 begrenzt, der einen Durchbruch 2.2 an der gegenüberliegenden Kanalinnenwand aufweist (vgl. Fig. 2).

In Profilsehnenrichtung (von links unten nach rechts oben in Fig. 3) ist die Stoßkammer 2 durch zwei Stege 2.3 begrenzt, die jeweils einen ersten Teil, der sich von einer Kanalinnenwand in den Kanal hinein erstreckt, und einen zweiten Teil aufweisen, der sich von der gegenüberliegenden Kanalinnenwand in den Kanal hinein erstreckt und von dem ersten Teil durch einen Durchbruch 2.4 beabstandet ist.

In Blattdickenrichtung (horizontal in Fig. 2; von links oben nach rechts unten in Fig. 3) ist die Kanalhöhe in der Stoßkammer 2 gegenüber einem in Kanallängsrichtung der Stoßkammer vor- und/oder nachgelagerten Kanalabschnitt 1.5 reduziert bzw. die Kanalinnenwand 2.5 an dieser Stelle lokal aufgedickt.

Die durch diese Aufdickungen 2.5 und die Stege 2.3 definierten Seitenwände der Stoßkammer 2 erstrecken sich parallel zur Schaufelblattlängsachse, die in Fig. 2 vertikal ist, d.h. in Fig. 2 senkrecht bzw. parallel zur Bildebene.

Die durch die Stege 2.3 definierten Seitenwände der Stoßkammer 2 erstrecken sich in einer ersten Biegeschwingungseigenformrichtung (horizontal in Fig. 2).

Die Stoßkammer ist in einem Bereich zwischen 80% und 50% der Schaufelblatthöhe (vertikal in Fig. 1), gemessen von dem Schaufelfuß 1.2, angeordnet.

Sie wird zusammen mit dem Kanal 1.5 urgeformt, insbesondere gegossen. Anschließend wird der Impulskörper 3 durch den Kanal 1.5 eingeführt, der als Kühlkanal ausgebildet ist.

**Bezugszeichenliste**

| | |
|---|---|
| 1 | Schaufel |
| 1.1 | Schaufelblatt |
| 1.2 | Schaufelfuß |
| 1.3 | Deckband |
| 1.5 | Kühlkanal |
| 2 | Stoßkammer |
| 2.1 | Steg |
| 2.2 | Durchbruch |
| 2.3 | Steg |
| 2.4 | Durchbruch |
| 2.5 | Aufdickung/Kanalhöhenreduzierung |
| 3 | Impulskörper |

## Patentansprüche

1. Schaufel (1) für eine Turbomaschine, mit einem Schaufelblatt (1.1), das einen Kanal (1.5) aufweist, **dadurch gekennzeichnet, dass** in dem Kanal eine Stoßkammer (2) mit einem verengten Querschnitt zur Aufnahme eines einzigen Impulskörpers (3) angeordnet ist.

2. Schaufel nach Anspruch 1, **dadurch gekennzeichnet, dass** die Stoßkammer in Kanallängsrichtung durch wenigstens einen Absatz, insbesondere einen Steg (2.1), begrenzt ist.

3. Schaufel nach einem der vorhergehenden Ansprüche, **dadurch gekennzeichnet, dass** die Stoßkammer in Profilsehnenrichtung durch wenigstens einen Steg, insbesondere durch zwei Stege (2.3), begrenzt ist.

4. Schaufel nach einem der beiden vorhergehenden Ansprüche, **dadurch gekennzeichnet, dass** der Steg (2.1, 2.3) einen Durchbruch (2.2, 2.4) aufweist.

5. Schaufel nach einem der vorhergehenden Ansprüche, **dadurch gekennzeichnet, dass** eine Kanalhöhe in Blattdickenrichtung in der Stoßkammer gegenüber einem in Kanallängsrichtung der Stoßkammer vor- und/oder nachgelagerten Kanalabschnitt reduziert ist (2.5).

6. Schaufel nach einem der vorhergehenden Ansprüche, **dadurch gekennzeichnet, dass** wenigstens eine Seitenwand der Stoßkammer sich, wenigstens im Wesentlichen, parallel zu einer Blattlängsachse erstreckt.

7. Schaufel nach einem der vorhergehenden Ansprüche, **dadurch gekennzeichnet, dass** wenigstens eine Seitenwand der Stoßkammer sich, wenigstens im Wesentlichen, in oder senkrecht zu einer Schwingungseigenformrichtung erstreckt.

8. Schaufel nach einem der vorhergehenden Ansprüche, **dadurch gekennzeichnet, dass** die Stoßkammer in einem Bereich zwischen 10% und 90%, insbesondere zwischen 80% und 50%, gemessen von einem Schaufelfuß, angeordnet ist.

9. Schaufel nach einem der vorhergehenden Ansprüche, **dadurch gekennzeichnet, dass** die Stoßkammer zusammen mit dem Kanal urgeformt ist.

10. Schaufel nach einem der vorhergehenden Ansprüche, **dadurch gekennzeichnet, dass** ein Impulskörper (3) in dem Kanal angeordnet ist.

11. Schaufel nach einem der vorhergehenden Ansprüche, **dadurch gekennzeichnet, dass** die Schaufel eine Lauf- oder Leitschaufel ist.

12. Schaufel nach einem der vorhergehenden Ansprüche, **dadurch gekennzeichnet, dass** der Kanal ein Kühlkanal ist.

13. Turbomaschine, insbesondere Gasturbine, insbesondere Flugtriebwerk-Gasturbine, mit wenigstens einer Verdichter- und/oder Turbinenstufe mit wenigstens einer Schaufel nach einem der vorhergehenden Ansprüche.

14. Verfahren zum Herstellen einer Schaufel nach einem der vorhergehenden Ansprüche, **dadurch gekennzeichnet, dass** die Stoßkammer mit dem Kanal urgeformt und der Impulskörper durch den Kanal eingeführt wird.

## Geänderte Patentansprüche

### Geänderte Patentansprüche gemäss Regel 137(2) EPÜ.

**1.** Schaufel (1) für eine Turbomaschine, mit einem Schaufelblatt (1.1), das einen Kanal (1.5) aufweist, der sich entlang seiner Kanallängsrichtung über die gesamte Schaufelblatthöhe erstreckt, wobei in dem Kanal eine Stoßkammer (2) mit einem verengten Querschnitt zur Aufnahme eines einzigen Impulskörpers (3) angeordnet ist,
**dadurch gekennzeichnet, dass** eine Kanalhöhe, die in Dickenrichtung des Schaufelblattes (1.1) verläuft, in der Stoßkammer (2) gegenüber einem in Kanallängsrichtung der Stoßkammer (2) vor- und nachgelagerten Kanalabschnitt reduziert ist (2.5), und
dass die Stoßkammer (2) in einem Bereich zwischen 10% und 90% der Schaufelhöhe, gemessen von einem Schaufelfuß, angeordnet ist.

**2.** Schaufel nach Anspruch 1, **dadurch gekennzeichnet, dass** die Stoßkammer in Kanallängsrichtung durch wenigstens einen Absatz, insbesondere einen Steg (2.1), begrenzt ist, um eine Bewegung des Impulskörpers (3) in Kanallängsrichtung formschlüssig zu begrenzen.

**3.** Schaufel nach einem der vorhergehenden Ansprüche, **dadurch gekennzeichnet, dass** die Stoßkammer in Profilsehnenrichtung des Schaufelblattes (1.1), d.h. in eine Richtung längs einer Skelett- oder Mittellinie des Schaufelblattquerschnitts, durch wenigstens einen Steg, insbesondere durch zwei Stege (2.3), begrenzt ist, wobei sich der wenigstens eine Steg, ausgehend von einer Kanalinnenwand, in den Kanal (1.5) hinein erstreckt.

**4.** Schaufel nach einem der beiden vorhergehenden Ansprüche, **dadurch gekennzeichnet, dass** der Steg (2.1, 2.3) einen Durchbruch (2.2, 2.4) aufweist, um einen Fluidstrom durch die Stoßkammer zu ermöglichen.

**5.** Schaufel nach einem der vorhergehenden Ansprüche, **dadurch gekennzeichnet, dass** der Impulskörper (3) kugelförmig ausgebildet ist.

**6.** Schaufel nach einem der vorhergehenden Ansprüche, **dadurch gekennzeichnet, dass** wenigstens eine Seitenwand der Stoßkammer sich im Wesentlichen parallel zu einer Blattlängsachse des Schaufelblattes (1.1) erstreckt.

**7.** Schaufel nach einem der vorhergehenden Ansprüche, **dadurch gekennzeichnet, dass** wenigstens eine Seitenwand der Stoßkammer sich im Wesentlichen in oder senkrecht zu einer Schwingungseigenformrichtung der Schaufel (1) erstreckt, wobei unter der Schwingungseigenformrichtung der Schaufel (1) eine Auslenkungsrichtung einer Schwingungseigenform der Schaufel (1), insbesondere einer Biege- oder Torsionseigenform, zu verstehen ist.

**8.** Schaufel nach einem der vorhergehenden Ansprüche, **dadurch gekennzeichnet, dass** die Stoßkammer in einem Bereich zwischen 80% und 50% der Schaufelhöhe, insbesondere einem zweitobersten Viertel der Schaufelhöhe, gemessen von einem Schaufelfuß, angeordnet ist.

**9.** Schaufel nach einem der vorhergehenden Ansprüche, **dadurch gekennzeichnet, dass** die Stoßkammer zusammen mit dem Kanal urgeformt ist.

**10.** Schaufel nach einem der vorhergehenden Ansprüche, **dadurch gekennzeichnet, dass** ein Impulskörper (3) in dem Kanal angeordnet ist.

**11.** Schaufel nach einem der vorhergehenden Ansprüche, **dadurch gekennzeichnet, dass** die Schaufel eine Lauf- oder Leitschaufel ist.

**12.** Schaufel nach einem der vorhergehenden Ansprüche, **dadurch gekennzeichnet, dass** der Kanal ein Kühlkanal ist.

**13.** Turbomaschine, insbesondere Gasturbine, insbesondere Flugtriebwerk-Gasturbine, mit wenigstens einer Verdichter- und/oder Turbinenstufe mit wenigstens einer Schaufel nach einem der vorhergehenden Ansprüche.
